# FASCICULE DE BREVET EUROPEEN

(11) **EP 3 489 035 B1**
(45) Date de publication et mention de la délivrance du brevet: **01.07.2020**
(21) Numéro de dépôt: 18207677.8
(22) Date de dépôt: 22.11.2018
(51) Int. Cl.: B60C 9/20, B60C 9/06

(54) **ARMATURE DE RENFORCEMENT DE PNEUMATIQUE**
VERSTÄRKUNGSBEWEHRUNG EINES REIFENS
FRAME FOR REINFORCING TYRE

(30) Priorité: 27.11.2017 FR 1761191
(43) Date de publication de la demande: 29.05.2019
(73) Titulaire: COMPAGNIE GENERALE DES ETABLISSEMENTS MICHELIN, 63000 Clermont-Ferrand (FR)
(72) Inventeur: PROST, Pascal, 63040 CLERMONT FERRAND CEDEX 9 (FR); FERIGO, Hervé, 63040 CLERMONT-FERRAND Cedex 9 (FR); PINEAU, Jacky, 63040 CLERMONT-FERRAND Cedex 9 (FR); ROTY, Gael, 63040 CLERMONT-FERRAND Cedex 9 (FR)
(74) Mandataire: Bauvir, Jacques

(56) Documents cités:
- EP-A1- 2 815 895
- WO-A1-2016/166056
- WO-A1-2017/195889

## Description

### Domaine de l'invention

L'invention a pour objet un pneumatique, et plus particulièrement à un pneumatique pour véhicule de tourisme dont les performances en bruit sont améliorées.

De façon générale, un pneumatique est un objet ayant une géométrie de révolution par rapport à un axe de rotation. Un pneumatique comprend deux bourrelets destinés à être montés sur une jante ; il comprend également deux flancs reliés aux bourrelets, un sommet comportant une bande de roulement destinée à entrer en contact avec le sol, le sommet ayant un premier côté relié à l'extrémité radialement extérieure de l'un des deux flancs et ayant un deuxième côté relié à l'extrémité radialement extérieure de l'autre des deux flancs.

La constitution du pneumatique est usuellement décrite par une représentation de ses constituants dans un plan méridien, c'est-à-dire un plan contenant l'axe de rotation du pneumatique. Les directions radiale, axiale et circonférentielle désignent respectivement les directions perpendiculaire à l'axe de rotation du pneumatique, parallèle à l'axe de rotation du pneumatique et perpendiculaire à tout plan méridien. Dans ce qui suit, les expressions « radialement », « axialement » et « circonférentiellement » signifient respectivement « selon une direction radiale », « selon la direction axiale » et « selon une direction circonférentielle » du pneumatique. Les expressions « radialement intérieur, respectivement radialement extérieur » signifient « plus proche, respectivement plus éloigné, de l'axe de rotation du pneumatique, selon une direction radiale ». Le plan équatorial CP est un plan perpendiculaire à l'axe de révolution du pneumatique, positionné axialement de façon à couper la surface de la bande de roulement sensiblement à mi-distance des bourrelets. Les expressions « axialement intérieur, respectivement axialement extérieur » signifient « plus proche, respectivement plus éloigné, du plan équatorial du pneumatique, selon la direction axiale ». Quant aux couches de renforcement, elles se caractérisent par le choix précis du matériau (renfort textile, renfort métallique, et assemblages spécifiques pour former des câbles) et pas l'angle que forment les câbles par rapport au plan équatorial.

### État de la technique

Comme on le sait, les pneumatiques pour applications routières, et tout particulièrement les pneumatiques pour véhicules de tourisme, apportent une contribution essentielle aux performances des véhicules en matière de résistance ou roulement (et donc d'efficacité énergétique des véhicules), d'adhérence, de réponse dynamique pour le guidage des véhicules (notamment en virage) et de bruit de roulement. Parmi les paramètres de conception des pneumatiques, l'homme du métier connait l'importance des armatures de renforcement formant la carasse et la ceinture du pneumatique.

Un exemple de conception particulière des armatures de renforcement est donné dans le document WO2016/166056 A1, qui propose un pneumatique dont le renforcement présent sous la bande de roulement est allégé par le fait qu'il n'y a qu'une seule couche de travail, combinée à une couche de carcasse dont les câbles constitutifs forment un angle, sous la bande de roulement, bien plus petit que dans les conceptions les plus classiques, et combinée à une couche de frettage radialement par-dessus les autres couches, et combiné à des choix particuliers de caractéristiques pour les câbles formant chacune de ces couches. L'ensemble de ces couches constitue l'armature de ceinture du pneumatique. L'invention exposée dans ce document vise à améliorer la résistance à la pénétration d'objets tout en proposant une armature allégée.

Cependant, cette solution comme en général toutes les conceptions proposant une armature de ceinture allégée, si elle apporte un niveau de rigidité de dérive satisfaisant, et donc une réponse dynamique pour le guidage des véhicules de bon niveau, est difficilement acceptable sur le plan de bruit de roulement, en particulier elle aboutit à un niveau élevé de bruit extérieur, par exemple une augmentation de l'ordre de 2 à 3 dBA par rapport à une conception classique formée par une couche de carcasse, radiale, deux couches de travail (angles typiques de l'ordre de ±25° et une couche de frettage (angle proche de 0°).

L'objectif de la présente invention est de proposer une meilleure alternative afin de réaliser un pneumatique allégé, capable de performances suffisantes tenue de route, endurance, sans présenter de dégradation en bruit car la réduction du bruit représente dorénavant un enjeux aussi important que la performance énergétique des pneumatiques et leurs performances en adhérence et leur réponse dynamique en virage.

### Brève description de l'invention

L'invention a donc pour objet un pneumatique comprenant :
- une bande de roulement en matériau élastomérique,
- une armature de ceinture formée par :
   ∘ une partie d'une couche de carcasse située radialement en regard de la bande de roulement, formée par des câbles textiles arrangés parallèlement entre eux,
   ∘ une seule couche de travail formée par des câbles métalliques arrangés parallèlement entre eux,
   ∘ une couche de frettage constituée de renforts de frettage formé par des fibres organiques, lesdits renforts de frettage formant, avec la direction circonférentielle un angle γ proche de 0°,
caractérisé en ce que
- les câbles textiles de ladite partie de la couche de carcasse située radialement en regard de la bande de roulement forment, avec la direction circonférentielle, un angle α dont la valeur absolue est comprise entre 40° et 45°, et
- les câbles métalliques de la seule couche de travail forment, avec la direction circonférentielle, un angle β dont la valeur absolue est comprise entre 21° et 26°.

Soulignons que puisque les valeurs d'angle sont données en valeur absolue, les angles peuvent avoir indistinctement des valeurs positives ou négatives.

Les inventeurs ont pu constater, de façon surprenante, que l'armature de renforcement selon l'invention, bien que très allégée, présente d'excellentes performances en bruit.

Quant à la couche de frettage, de préférence, on la choisit de façon à ce que la force à rupture par mm de largeur axiale de couche de frettage FR soit au moins égale à 35 daN/mm (et de préférence au moins égale à 45 daN/mm), et de façon à ce que son allongement à rupture AR soit au moins égal à 5% (et de préférence au moins égal à 5,5%), et son un module d'extension sécant MA soit au moins égal à 250 daN/mm (et de préférence au moins égal à 300 daN/mm), pour une force appliquée F égale à 15% de la force à rupture FR de ladite couche de frettage.

### Brève description des figures

Les objets de l'invention sont maintenant décrits à l'aide du dessin annexé, dans lequel :
- la figure 1 représente de manière très schématique (sans respect d'une échelle spécifique), une coupe radiale d'un pneumatique conforme à un mode de réalisation de l'invention ;
- la figure 2 illustre des combinaisons d'angle caractéristiques de l'invention.

### Description détaillée de l'invention

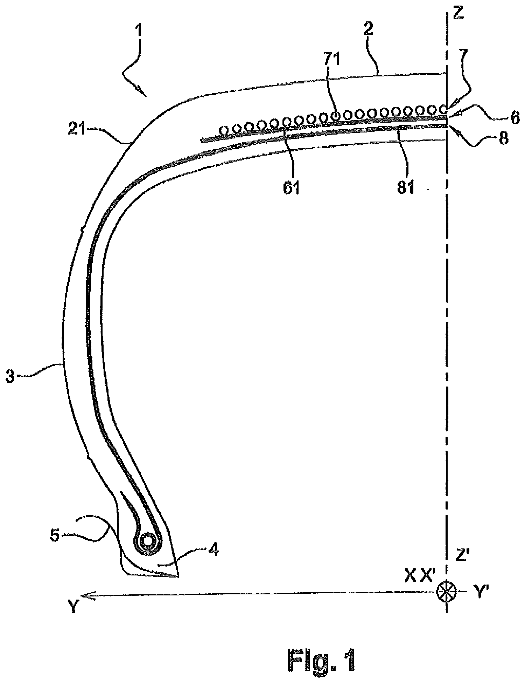

On voit à la figure 1 un pneumatique comprenant un sommet 1, deux flancs 3 reliés chacun à un bourrelet 4. Le sommet 1 est relié de chaque côté à l'extrémité radialement extérieure de chacun des deux flancs. Le sommet 1 comporte une bande de roulement 2 en matériau élastomérique. La figure 1 montre un plan équatorial ZZ', plan perpendiculaire à l'axe de rotation du pneumatique, situé à mi-distance des deux bourrelets 4 et passant par le milieu de l'armature de ceinture ; la figure 1 indique aussi, par des flèches, les directions axiale YY' et la direction de roulement XX' du pneumatique.

Chaque bourrelet comporte une tringle ; une couche de carcasse 8 est enroulée autour de chaque tringle. De manière connue en soi, la couche de carcasse est constituée par des câbles (dans ce cas de mise en œuvre, des câbles textiles) disposés sensiblement parallèlement les uns aux autres. La couche de carcasse 8 est, au moins localement dans les flancs, orientée de façon radiale (c'est-à-dire que les câbles forment un angle compris entre 80° et 90° avec la direction radiale).

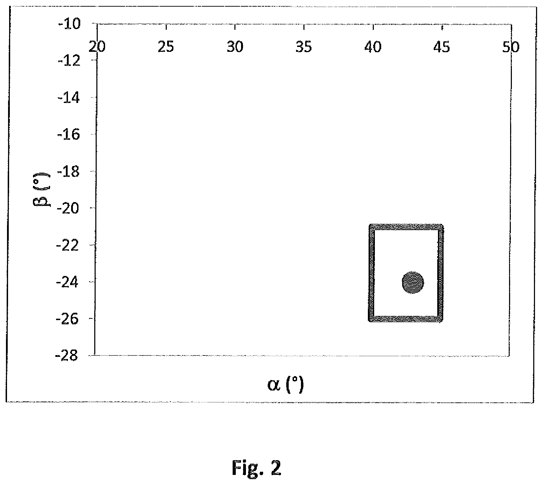

Le sommet 1 comporte aussi une armature de ceinture formée par, d'une première part, une partie 81 de la couche de carcasse 8 située radialement en regard de la bande de roulement 2, laquelle partie est formée et par des câbles textiles arrangés parallèlement entre eux, pour une seconde part, une seule couche de travail 6 formée par des câbles métalliques 61 arrangés parallèlement entre eux. En outre, le sommet 1 comporte également une seule couche de frettage 7 constituée de renforts de frettage 71 formé par des fibres organiques, lesdits renforts de frettage 71 formant, avec la direction circonférentielle un angle γ proche de 0°. Dans cet exemple de réalisation, les câbles textiles de ladite partie 81 de la couche de carcasse 8 située radialement en regard de la bande de roulement 2 forment, avec la direction circonférentielle, un angle α dont la valeur est de ±43° avec le plan équatorial ZZ', et les câbles métalliques 61 de la seule couche de travail 6 forment, avec la direction circonférentielle, un angle β dont la valeur est de ±24° avec le plan équatorial ZZ'. Quelles que soient leurs valeurs, les orientations respectives de la couche de carcasse et de la seule couche de travail sont selon des directions de signes opposés. Cette mise en œuvre de l'invention est représentée à la figure 2 par le point apparaissant à l'intérieur de la plage de valeurs d'angles α et β représentative de l'invention.

Notons que la couche de frettage 7 pourrait être constituée de câble ou de fil métallique. Dans tous les cas, l'ensemble de ces couches forme une triangulation procurant à l'armature de ceinture une excellente rigidité contre les déformations par flexion sur champ.

Il est à noter que la couche de frettage 71 est en général réalisée par enroulement d'une bandelette comportant plusieurs câbles disposés parallèlement les uns aux autres, sous forme d'un semi-fini comportant non seulement les câbles textile, ou encore constituée de câble ou de fil métallique, mais aussi une gomme dite de calandrage. En général, toutes les couches comportent un gomme de calandrage, que ce soit la ou les couches de carcasse, les couches de ceinture : elles sont constituées par des éléments de renforcement filaires, monofilamentaires ou câblés, enrobés de gomme de calandrage les liant entre eux pour former un semi-fini de fabrication ; la gomme de calandrage est de composition choisie en général pour répondre à la fois aux impératifs de procédé de fabrication et aussi pour conférer au pneumatique en tant que produit fini des caractéristiques appropriées. Rappelons au passage qu'il existe des procédés de fabrication où la dépose de câbles de couche de ceinture est faite fil par fil sur une ébauche de pneumatique en cours de construction, sans passer par l'étape de fabrication d'un semi-fini comme une couche calandrée ; l'invention est compatible avec un tel procédé. Toutes ces considérations ne sont qu'un rappel de données techniques bien connues de l'homme du métier et ne font pas en soi partie de l'invention.

L'invention a été plus particulièrement étudiée pour un pneumatique de tourisme de dimension 245/45R18 , destiné à être monté sur une jante 8.00J18 et à être gonflé à une pression nominale de 2,5 bars en « normal load » et 2,9 bars en « extra load », selon la norme ETRTO (European Tyre and Rim Technical Organisation). Une comparaison a été effectuée entre deux variantes de l'invention et un pneumatique construit selon l'enseignement du document WO2016/166056 A1, et de dimension 245/45R18.

Le tableau 1 ci-après présente des résultats théoriques relatifs aux rigidités radiales Rxx et de cisaillement Gxy, issus de calculs analytiques basés sur les techniques classiques d'homogénéisation des composites, ainsi que des pressions d'épreuve théoriques, pour un pneumatique de dimension 245/45R18, dans lequel la variante S1 (70-40) désigne un pneumatique ayant une couche de carcasse à 70° et une couche de sommet à -40°, et la variante S2 (43-24) désigne un pneumatique selon l'invention ayant une couche de carcasse à 43° et une couche de sommet à -24°:

**Tableau 1**

| | **Rigidité circonférentielle Rxx en valeur relative (%)** | **Rigidité de cisaillement Gxy en valeur relative (%)** | **Pression d'épreuve de la structure en valeur relative (%)** |
|---|---|---|---|
| **Référence R** | 100 | 100 | 100 |
| **Variante S1 70-40** | 110 | 28 | 97 |
| **Variante S2 : 43-24** | 113 | 29 | 133 |

La Rigidité circonférentielle Rxx, exprimée en daN/mm, est la force radiale à appliquer au pneumatique pour obtenir un déplacement radial de son sommet égal à 1mm sur une surface de 1 mm². La rigidité de cisaillement Gxy, exprimée en daN/mm, est la force de cisaillement à appliquer au pneumatique pour obtenir un déplacement de cisaillement de 1 mm dans le plan des couches sur une surface de 1 mm². La pression d'épreuve théorique du pneumatique, exprimée en bars, est une caractéristique de résistance à la pression du pneumatique. Les caractéristiques de Rigidité circonférentielle Rxx et de rigidité de cisaillement Gxy, ainsi que la pression d'épreuve sont exprimées en valeur relative par rapport aux caractéristiques correspondantes de la référence de l'état de la technique R, prises comme base 100.

Selon le tableau 1, les variantes S1, S2 présentent des valeurs de Rigidité circonférentielle Rxx et légèrement supérieures des valeurs obtenues pour la référence de l'état de la technique R. La variante S1 présente une valeur de pression d'épreuve légèrement inférieure et la variante S2 présente une valeur de pression d'épreuve légèrement supérieure. Par contre les rigidités de cisaillement Gxy sont très inférieures à celles de la référence R, ce qui est normal compte tenu du fait que l'armature de travail ne comprend qu'une seule couche de travail.

Le tableau 2 ci-après présente des résultats de mesure relatifs aux diverses architectures de pneumatique étudiées, pour un pneumatique de dimension 245/45R18 :

**Tableau 2**

| | **Rigidité de dérive en valeur relative (%)** | **Performance bruit (écart en dB)** | **Pression d'épreuve du pneumatique gonflé à l'eau (bars)** |
|---|---|---|---|
| **Référence R** | 100 | Référence | >15 bars |
| **Variante S1 70-40** | 100 | +1,9 | >15 bars |
| **Variante S2 : 43-24** | 110 | +0,4 | >15 bars |

La rigidité de dérive Dz d'un pneumatique est la force axiale appliquée au pneumatique pour obtenir une rotation de 1° du pneumatique autour d'une direction radiale. Dans le tableau 2, la rigidité de dérive est exprimée en valeur relative, c'est-à-dire en pourcentage de la référence de l'état de la technique prise comme base 100, pour un pneumatique de dimension 245/45R18, soumis à une charge égale à 0,8 fois sa charge nominale, au sens de la norme ETRTO, ladite charge nominale étant égale à 5572 N.

Le test de pression d'épreuve du pneumatique est réalisé sur un pneumatique gonflé à l'eau. La valeur seuil minimale retenue pour garantir une résistance à la pression du pneumatique avec un niveau de sécurité satisfaisant est prise égale à 15 bars. Selon le tableau 4, par rapport aux résultats obtenus pour la référence R, la variante S1, de structure allégée décrite dans l'état de l'art (cf. document WO2016/166056 A1) présente une rigidité de dérive du même niveau que la référence mais présente une pénalisation significative en bruit. Cette pénalisation est fortement atténuée en utilisant, avec les mêmes matériaux, une combinaison d'angle de type 43-24 puisque cette pénalisation est ramenée à +0,4 dB. Il est à noter que ces résultats sont obtenus pour des structures de pneumatique allégées, comportant une couche de carcasse, une seule couche de travail et une frette ne comprenant qu'une seule couche de travail au lieu de deux couches de travail croisées l'une par rapport à l'autre pour la référence R.

L'invention permet, avec une seule couche de travail, d'adopter pour cette dernière une orientation comprise entre 21° et 26°, c'est-à-dire plutôt circonférentielle, et elle permet donc d'ajouter de la rigidité circonférentielle à la structure du pneu pour une plage limités d'angle de couche de carcasse. Ce type de combinaison est avantageux pour maximiser la tenue en centrifugation du sommet du pneu, pour les performances à haute vitesse. On obtient ainsi un compromis bruit / tenue en centrifugation très intéressant.

On voit que la variante S2 de l'invention donne des résultats tout particulièrement intéressants.

L'invention n'est pas limitée aux renforts de carcasse et aux renforts de travail précédemment décrits. Les renforts de carcasse peuvent être en tout type de matériau textile, tels que, par exemple et de façon non exhaustive, le PET, l'aramide, le nylon ou toute combinaison de ces matériaux. Les renforts de travail sont des câbles métalliques pouvant être des assemblages divers, tels que, par exemple et de façon non exhaustive, des câbles de formule 3.26 (assemblage de 3 fils de 0,26 mm de diamètre), 3.18 (assemblage de 3 fils de 0,18 mm de diamètre), 2.30 (assemblage de 2 fils de 0,30 mm de diamètre, avec un pas d'hélice de 14 mm) ou des mono-filaments de diamètre 0,32 ou 0,40 mm. De même les renforts de frettage 71 peuvent être aussi constitués de matériaux métalliques.

L'invention n'est pas limitée à un pneumatique pour véhicule de tourisme, mais peut s'étendre, de façon non exhaustive, à des pneumatiques destinés à équipés des véhicules à 2 roues tels que des motos, à des véhicules de type poids lourd ou Génie Civil.

## Revendications

1. Pneumatique comprenant :
- une bande de roulement (2) en matériau élastomérique,
- une armature de ceinture formée par :
∘ une partie (81) d'une couche de carcasse (8) située radialement en regard de la bande de roulement (2), formée par des câbles textiles arrangés parallèlement entre eux,
∘ une seule couche de travail (6) formée par des câbles métalliques (61) arrangés parallèlement entre eux,
∘ une couche de frettage (7) constituée de renforts de frettage (71) formé par des fibres organiques, lesdits renforts de frettage (71) formant, avec la direction circonférentielle un angle γ proche de 0°,
**caractérisé en ce que**
• les câbles textiles de ladite partie (81) de la couche de carcasse (8) située radialement en regard de la bande de roulement (2) forment, avec la direction circonférentielle, un angle α dont la valeur absolue est comprise entre 40° et 45°, et
• les câbles métalliques (61) de la seule couche de travail (6) forment, avec la direction circonférentielle, un angle β dont la valeur absolue est comprise entre 21° et 26°.

2. Pneumatique selon la revendication précédente, dans lequel la couche de frettage (7) a une force à rupture par mm de largeur axiale de couche de frettage FR au moins égale à 35 daN/mm, et un allongement à rupture AR au moins égal à 5%, et un module d'extension sécant MA au moins égal à 250 daN/mm, pour une force appliquée F égale à 15% de la force à rupture FR de ladite couche de frettage (7).

3. Pneumatique selon la revendication 2, dans lequel la couche de frettage (7) a une force à rupture par mm de largeur axiale de couche de frettage FR au moins égale à 45 daN/mm, un allongement à rupture AR au moins égal à 5,5%, un module d'extension sécant MA au moins égal à 300 daN/mm, pour une force appliquée F égale à 15% de la force à rupture FR de ladite couche de frettage (7).

## Patentansprüche

1. Luftreifen, der enthält:
- einen Laufstreifen (2) aus Elastomermaterial,
- eine Gürtelbewehrung geformt von:
∘ einem Teil (81) einer Karkassenschicht (8), der sich radial gegenüber dem Laufstreifen (2) befindet, geformt von parallel zueinander angeordneten Textilkorden,
∘ einer einzigen Arbeitsschicht (6), die von parallel zueinander angeordneten Metallkorden (61) geformt wird,
∘ eine Bandagierungsschicht (7), bestehend aus von organischen Fasern gebildeten Bandagierungsverstärkungen (71), wobei die Bandagierungsverstärkungen (71) mit der Umfangsrichtung einen Winkel γ nahe 0° bilden,
**dadurch gekennzeichnet, dass**
• die Textilkorde des Teils (81) der Karkassenschicht (8), der sich radial gegenüber dem Laufstreifen (2) befindet, mit der Umfangsrichtung einen Winkel α bilden, dessen Absolutwert zwischen 40° und 45° liegt, und
• die Metallkorde (61) der einzigen Arbeitsschicht (6) mit der Umfangsrichtung einen Winkel β bilden, dessen Absolutwert zwischen 21° und 26° liegt.

2. Luftreifen nach dem vorhergehenden Anspruch, wobei die Bandagierungsschicht (7) eine Bruchkraft pro mm axialer Breite der Bandagierungsschicht FR mindestens gleich 35 daN/mm und eine Bruchdehnung AR mindestens gleich 5% und ein Dehnungs-Sekantenmodul MA mindestens gleich 250 daN/mm für eine angewendete Kraft F gleich 15% der Bruchkraft FR der Bandagierungsschicht (7) hat.

3. Luftreifen nach Anspruch 2, wobei die Bandagierungsschicht (7) eine Bruchkraft pro mm axialer Breite der Bandagierungsschicht FR mindestens gleich 45 daN/mm, eine Bruchdehnung AR mindestens gleich 5,5%, ein Dehnungs-Sekantenmodul MA mindestens gleich 300 daN/mm für eine angewendete Kraft F gleich 15% der Bruchkraft FR der Bandagierungsschicht (7) hat.

## Claims

1. Tyre comprising:
- a tread (2) made of an elastomer material,
- a belt reinforcement formed of:
∘ a part (81) of a carcass layer (8) located radially opposite the tread (2), formed of textile cords arranged parallel to each other,
∘ a single working layer (6) formed of metal cords (61) arranged parallel to each other,
∘ a hooping layer (7) consisting of hoop reinforcers (71) and formed of organic fibres, said hoop reinforcers (71) forming, with the circumferential direction, an angle γ close to 0°,
**characterized in that**
• the textile cords of said part (81) of the carcass layer (8) located radially opposite the tread (2) form, with the circumferential direction, an angle α whose absolute value is between 40° and 45°, and
• the metal cords (61) of the single working layer (6) form, with the circumferential direction, an angle β whose absolute value is between 21° and 26°.

2. Tyre according to the preceding claim, wherein the hooping layer (7) has a force at break per mm of axial width of the hooping layer FR at least equal to 35 daN/mm, and an elongation at break AR at least equal to 5%, and a secant extension modulus MA at least equal to 250 daN/mm, for an applied force F equal to 15% of the force at break FR of said hooping layer (7).

3. Tyre according to Claim 2, wherein the hooping layer (7) has a force at break per mm of axial width of the hooping layer FR at least equal to 45 daN/mm, an elongation at break AR at least equal to 5.5%, a secant extension modulus MA at least equal to 300 daN/mm, for an applied force F equal to 15% of the force at break FR of said hooping layer (7).
